# EUROPEAN PATENT SPECIFICATION

(11) **EP 1 482 783 B1**
(45) Date of publication and mention of the grant of the patent: **12.04.2006**
(21) Application number: 02796963.3
(22) Date of filing: 17.12.2002
(51) Int. Cl.: A01K 27/00

(54) **DOG LEASH PROVIDED WITH A RIGID HANDLE INCLUDING MEANS FOR COLLECTING AND DISPOSING OF THE ANIMAL EXCREMENTS**
MIT EINEM STARREN GRIFF, DER EIN MITTEL ZUM AUFSAMMELN UND ENTSORGEN DER TIEREXKREMENTE ENTHÄLT, VERSEHENE HUNDELEINE
LAISSE POUR CHIEN A POIGNEE RIGIDE COMPRENANT DES MOYENS POUR COLLECTER ET SE DEBARRASSER DES EXCREMENTS D'ANIMAUX

(30) Priority: 20.02.2002 IT FI20020019 U; 15.04.2002 IT FI20020039 U
(43) Date of publication of application: 08.12.2004
(73) Proprietor: Mancini, Vasco, 52025 Montevarchi (IT)
(72) Inventor: Mancini, Vasco, 52025 Montevarchi (IT)
(74) Representative: Bardini, Marco Luigi
(86) International application number: PCT/IT2002/000796
(87) International publication number: WO 2003/069986

(56) References cited:
- DE-A- 10 003 418
- DE-A- 10 042 964
- DE-U- 9 405 330
- FR-A- 2 815 978
- GB-A- 2 361 615
- US-A- 5 826 547

## Description

### Field of the Invention

The present invention relates to the field of the articles for the care of pets, namely dogs. More specifically, it relates to a new type of dog leash.

### Description of the prior art

It is well known how dog excrements, by soiling the sidewalks, and - more generally speaking - the streets and all the outdoor urban places, cause problems and discomfort to the people. Many attempts have been made in the past, even by means of strong press and advertising campaigns, for persuading the pet owners to collect and dispose of the excrements. To this purpose, various devices have been proposed which are capable of making things easier, that is to say of permitting an effortless collecting of the excrements, without any risks of getting the hands soiled.

However, the use of such devices, or of any other more basic tools (paper or plastic gloves and small bags) is quite rare. As a matter of fact, many people deem it annoying to carry a supplementary equipment with them, when taking the dog for a walk. Other people leave the equipment at home in most cases. Therefore, the laziness and carelessness prevail over the good manners and public spirit, and the problem remains unsolved.

Dog leashes comprising also means for collecting the dog excrements, releasably connected to rigid grip means of the leash are known in the art (e.g. published patent applications n. DE-U-9405330, US5826547) . However, these leashes are relatively cumbersome, aesthetically unattractive and not user-friendly.

### Summary of the invention

The present invention can contribute to the solution of the above mentioned problem, i.e. it can encourage the habit of collecting and disposing of the dog excrements by its owner taking it for a walk.

According to the present invention there is provided a dog leash The essential features of which are defined in appended claim 1.

Thanks to the leash according to the invention, one gets rid of the discomfort of carrying supplementary collection equipment, because everything needed for collecting and disposing of the excrements is built-in with the leash. At the same time, there is no longer a possibility of leaving the equipment at home.

According to a preferred embodiment, the leash is an automatic one, i.e. a leash in which the rigid GRIP body has a box-like structure defining a cavity that houses a wire-shaped or band-shaped member, which is wound and unwound automatically, thanks to elastic return means. In this case it is the said body, which is already present in the ordinary automatic leashes, that is exploited for providing a support to the means for collecting the excrements. As an alternative, the normal wire-shaped or band-shaped member which a common non-automatic leash is made up of, is provided with an additional rigid grip body, with the aim of permitting the integration of the means for collecting and disposing of the excrements.

In all cases, such collecting means comprise a scoop, which is inserted flush in a seating formed in said body. Snap engagement means are arranged between the seating and the scoop, in order to secure the latter in the inserted position. The scoop has a flat bottom which, in the inserted position, is perfectly coplanar to a flat face of the body in which the insertion seating is formed. In this way, the bottom of the scoop and the bottom of the seating define a housing for some small bags to be filled with the excrements so as to facilitate the disposal thereof. The small bags are preferably arranged in a suitable box. Still according to a preferred embodiment, the scoop comprises a handle piece which, when the scoop is inserted, couples with an handle piece which is integral to the body, forming the actual grip handle of the leash.

When the above mentioned preferred embodiments are chosen, the leash becomes particularly practical and handy, it can be manufactured easily and inexpensively, and is esthetically pleasant, due to its being plain, light and compact. The habit of collecting and disposing of the excrements of one's own pet cannot but be remarkably encouraged.

### Brief description of the drawings

Other characteristics and advantages of the new leash according to the present invention will be apparent from the following description of an embodiment thereof, to be intended as an example and not limitative, with reference to the attached drawings, in which:
- figure 1 is a schematic perspective view of a grip body of a leash of the automatic type according to the invention, in an assembled configuration;
- figure 2 is a schematic perspective view of the body of figure 1, in an exploded configuration;
- figure 3 is a plan view, seen from the exterior, of a shell portion of the body of the previous figures, deprived of the scoop and of a bag-holding box;
- figure 4 is a side elevation of the shell portion of figure 3, seen from the side of the handle piece;
- figure 5 is a plan view, seen from the exterior, of the scoop to be coupled with the shell portion of figures 3 and 4;
- figure 6 is a side elevation of the scoop of figure 5, seen from the longitudinal side thereof; and
- figure 7 is a top plan view of a bag-holding box to be inserted between the shell portion and the scoop of the previous figures.

### Detailed description of the invention

Referring to said figures, the leash according to the invention comprises a wire-shaped or band-shaped flexible member to be connected with a first end to a collar or harness of a pet. The flexible member is neither described nor shown, been however perfectly analogous to the ones in the prior art. The leash comprises also a rigid body 1, to which the other end of the flexible member is connected.

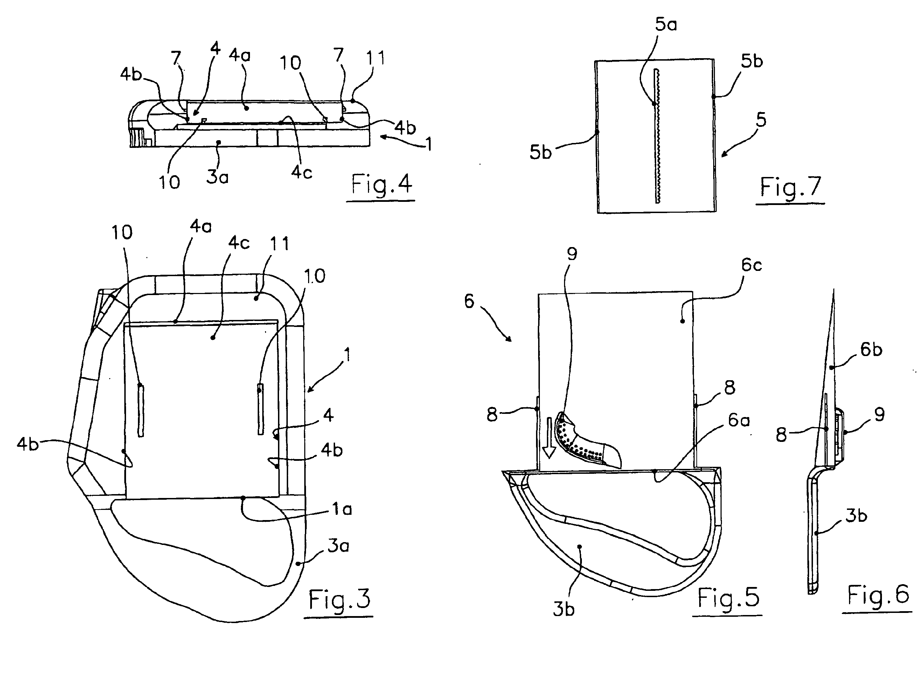

In the depicted embodiment, the leash is of the so-called "automatic" type, namely in which the flexible member is unwound from a pulley and automatically wound thereon thanks to elastic return means. Therefore, body 1 corresponds to the conventional box-shaped body which houses the pulley for winding/unwinding the flexible member. Body 1 is flattened, at right angle to the rotation axis of the pulley, thereby defining two main flat faces of which only one is visible in the figures and indicated at 11. Moreover, the body is made of two shell portions, cooperating with each other so as to define the cavity which houses the pulley assembly. Only the shell portion that comprises flat face 11 is represented in figures 3 and 4.

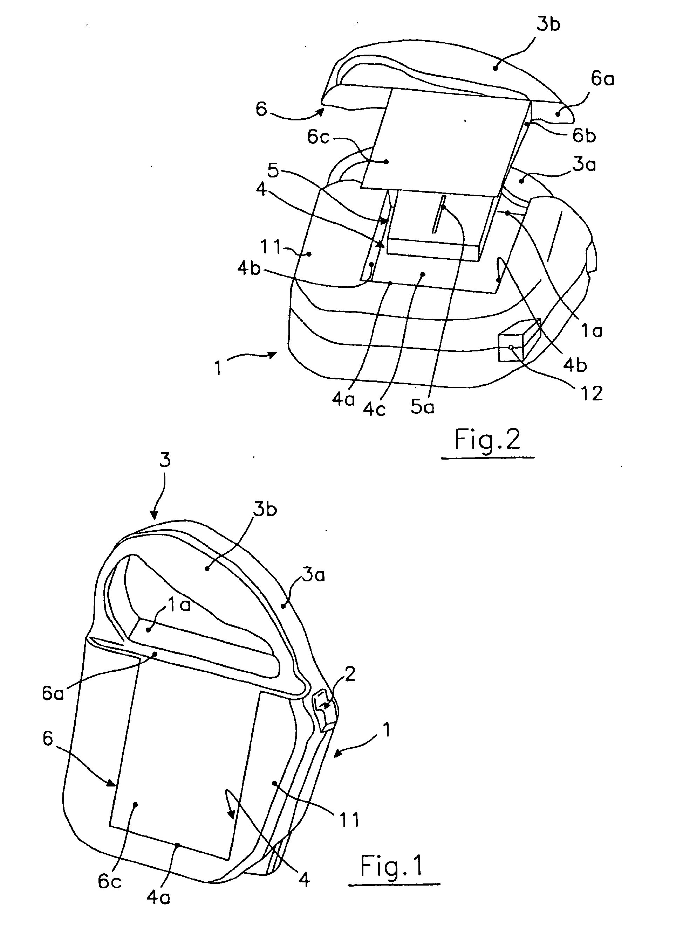

The pulley, the flexible member to be connected to the collar or the harness of the pet, and all the other supplementary components, namely the elastic return means which drive the pulley for automatically winding the flexible member, are neither described nor shown in the figures, being however the same as in the known automatic leashes. Only in figure 1, on a longitudinal side of body 1 there is visible a button 2 for unlocking the rotation of the pulley. Still in figure 1, there is also visible an outlet hole of the flexible member from body 1, indicated at 12.

A handle piece 3a, described in a better way further on, integrally projects from a side 1a of body 1, still over the flattening plane of the same body. A seating 4 is formed in face 11 and has a quadrilateral outline when seen from a direction which is normal to the face. More precisely, seating 4 runs from side 1a of body 1 - i.e. the side which is adjacent to handle piece 3a - to an opposite edge indicated at 4a. Seating 4 is open along side 1a, above and beyond over face 11, defining a flat bottom 4c and opposite longitudinal side walls 4b.

A scoop 6, shown in particular in figures 4 and 5, has the same overall shape of seating 4, with a flat bottom 6c corresponding to bottom 4c, longitudinal side walls 6b (having a triangular outline in the example) which project from two opposite sides of bottom 6c, and a transverse wall 6a, in turn projecting from a side of bottom 6c between the two longitudinal side walls 6b. Transverse wall 6a is fit for obstructing completely the opening of seating 4 over the side of the handle piece 3a.

Thus, scoop 6 is engageable within seating 4, by inserting it through the opening over side 1a, and making it slide down the length of body 1 with longitudinal side walls 6b placed adjacently to side walls 4b of seating 4, and with bottom 6c placed coplanarly to flat face 11. To this purpose, guide slots 7 and protrusions 8, designed for mutual engagement, are formed along the longitudinal side walls 4b and 6b, respectively. Snap engagement means, not shown, e.g. consisting of end enlargements of protrusions 8 and corresponding cutouts in slots 7, lock scoop 6 in the position of complete insertion, shown in figure 1, in which the scoop stops against edge 4a of seating 4. In such figure, it can be noticed that bottom 6c and transverse wall 6a of scoop 6 completely close seating 4, so that the outer surface of body 1 becomes continuous and regular.

From transverse wall 6a, which is elongated on side 1a of body 1 beyond the two longitudinal side walls 4b of seating 4, there extends outwardly a handle piece 3b. Handle piece 3b is integral to transverse wall 6a and has the same shape of handle piece 3a of body 1. The two handle pieces 3a and 3b mutually couple when the scoop is inserted (figure 1) so as to form an actual grip handle 3 of the leash.

When scoop 6 is inserted, bottom 6c and bottom 4c of seating 4 are mutually spaced. In this way, there is defined a closed housing which can be used for containing further equipment for assisting the operations of collecting and disposing of the excrements, namely and typically some disposable small bags made of paper, synthetic material or any other suitable material.

Advantageously, said bags are arranged within a suitable box 5 similar to that which can be seen in figure 2 and is shown by itself in figure 6. Box 5 can be secured to bottom 4c of the seating 4 thanks to lips 5b projecting sideways therefrom and engaging with protrusions 10 rising from bottom 4c. Thanks to a slot 5a having a saw-like edge, the bags, not shown, can be pulled off the box, and torn away from a band with partial cut lines, suitably arranged within the box. Bands of the above mentioned kind will be made available on the market, so as to be easily re-loaded in box 5 from an opening (not visible), once run out. As an alternative, when the bags have run out, box 5 will be disposed of, and replaced by a new box loaded with bags, available on the market to the purpose.

When scoop 6 is inserted, the leash will have therefore an appearance and a functionality entirely corresponding to those of an automatic leash according to the prior art. When scoop 6 has to be used, that is to say when the pet excrements have to be collected, it will be simply ejected by exerting a light manual force on the outer face of bottom 6c. In order to assist this operation, a projection 9 may be provided on said face, as visible in figures 4 and 5.

Scoop 6, the handling of which is made easier thanks to its own handle piece 3b, can be used while the leash continues to perform its own normal functions. If scoop 6 is preliminarily lined with one of the disposable bags, the scoop and also the hand of the user will not get soiled by the excrements. In this respect, also disposable gloves may be arranged in the housing formed by scoop 6 and seating 4. When the excrements have been collected, the same bag lining the scoop, or a further one, will permit the disposal of the excrements, and scoop 6 will be secured back to body 1.

It will be easily appreciated how the leash according to the invention offers an extremely effective contribution to the solution of the problem mentioned in the introductory part of the present description. The whole assembly of body 1, scoop 6 and box 5 can be manufactured by using plastics, with molding operations of a conventional type.

The depicted embodiment, although advantageous under a plurality of viewpoints (handiness, pleasant appearance, cost-effective production), may undergo a number of constructive modifications within the scope of the appended claims.

In case of an automatic leash, like the one above described as an example, it will be the box-like rigid body which is already present, to be used for supporting the collecting means. However, the invention can be generally exploited in common leashes, that is to say the leashes merely formed by a flexible and inextensible member (made of leather, tissue, metal chain or plastics). In the latter case a supplementary rigid grip body will be resorted to, and the flexible member will be fastened to the outside of the supplementary body.

Variations and/or modifications can be brought to the dog leash provided with a rigid handle including means for collecting and disposing of the animal excrements according to the present invention without departing from the scope of the invention itself as defined by the appended claims.

## Claims

1. A dog leash comprising a wire-shaped or band-shaped flexible member with a first end to be fixed to a collar or harness of a dog, and a rigid body (1) for gripping the other end of said wire-shaped or band-shaped member, the leash further comprising a scoop (6) for collecting the dog excrements, releasably connected to said rigid body (1) so as not to disturb the normal use of the leash, the scoop (6) being inserted flush within a seating (4) formed in said body (1), engagement means being arranged between said seating (4) and said scoop (6), in order to secure the latter in the inserted position, **characterized in that** said body (1) comprises at least one flat face (11), said seating (4) being formed in said flat face (11) and affecting also a side (1a) of said body (1) adjacent to said flat face (11), the opening on said side (1a) permitting a sliding insertion of said scoop (6) within said seating (4), said scoop (6) comprising a flat bottom (6c) for completely obstructing the opening of said seating (4) over said flat face (11).

2. The dog leash according to claim 1, wherein said seating (4) has a quadrilateral outline, when seen from a direction at right angle to said flat face (11), said flat bottom (6c) of said scoop (6) having the same quadrilateral outline of said seating (4), a transverse wall (6a) projecting from a side of said bottom (6c) for completely obstructing said opening of said seating (4) on said side (1a).

3. The dog leash according to claim 1 or 2, wherein a grip handle (3) projects from said side (1a) of side body (1) affected by said seating (4).

4. The dog leash according to claim 3, wherein said scoop (6) comprises a handle piece (3b) which, when the scoop is inserted, couples with a handle piece (3a) integral to said body (1) so as to form said grip handle (3) of the leash.

5. The dog leash according to any of the previous claims, wherein said scoop (6) comprises longitudinal side walls (6b) projecting at right angle from said bottom (6c), said longitudinal side walls (6b) being provided with protrusions (8) fit for sliding engagement with slots (7) formed in corresponding longitudinal side walls (4b) of said seating (4).

6. The dog leash according to any of the previous claims, wherein an outer face of said bottom (6c) of said scoop (6) is provided with grip means (9) for assisting the ejection of said scoop (6) out of said seating (4).

7. The dog leash according to any of the previous claims, comprising supplementary means for collecting and disposing of the excrements, such as disposable small bags, arranged in a closed housing formed by said seating (4) and said scoop (6) in the inserted position.

8. The dog leash according to claim 7, wherein said small bags are arranged in a box (5) fit to be releasably secured to a bottom (4c) of said seating (4).

9. The dog leash according to claim 8, wherein a slot (5) with a saw-like edge (5a) is formed in said box (5) in order to allow the pulling out of the small bags, and the tearing away thereof from a band with partial cut lines arranged within the box (5).

10. The dog leash according to any of the previous claims, wherein said body (1) has a box-like structure, housing a pulley for the automatic winding/unwinding of said flexible member, driven by elastic return means.

## Revendications

1. Une laisse pour chien comportant un élément flexible en forme de fil ou de bande avec une première extrémité apte à être fixée à un collier ou à un harnais de chien, et un corps rigide (1) pour tenir l'autre extrémité du dit élément en forme de fil ou de bande, la laisse comportant en outre un réceptacle (6) pour collecter les excréments de chien, connecté de façon détachable au dit corps rigide (1) de façon à ne pas gêner l'utilisation normale de la laisse, le réceptacle (6) étant inséré à affleurement dans une assise (4) réalisée dans ledit corps (1), des moyens d'enclenchement étant aménagés entre ladite assise (4) et ledit réceptacle (6), afin de fixer ce dernier en position d'insertion, **caractérisée en ce que** ledit corps (1) comporte au moins une face plane (11), ladite assise (4) étant réalisée dans ladite face plane (11) et touchant aussi un côté (1a) du dit corps (1) adjacent à ladite face plane (11), l'ouverture sur ledit côté (1a) permettant une insertion par coulissement du dit réceptacle (6) dans ladite assise (4), ledit réceptacle (6) comportant un fond plat (6c) pour obturer complètement l'ouverture de ladite assise (4) sur ladite face plane (11).

2. La laisse pour chien selon la revendication 1, dans laquelle ladite assise (4) a un contour en forme de quadrilatère, quand elle est vue d'une direction à angle droit par rapport à ladite face plane (11), ledit fond plat (6c) du dit réceptacle (6) ayant le même contour en forme de quadrilatère que ladite assise (4), une paroi transversale (6a) formant saillie d'un côté du dit fond (6c) pour obturer complètement ladite ouverture de ladite assise (4) sur ledit côté (1a).

3. La laisse pour chien selon l'une des revendications 1 et 2, dans laquelle une poignée de préhension (3) fait saillie à partir du dit côté (1a) du dit corps (1) touché par ladite assise (4).

4. La laisse pour chien selon la revendication 3, dans laquelle le réceptacle (6) comporte une partie de poignée (3b) qui, quand le réceptacle est inséré, s'accouple à une partie de poignée (3a) faisant partie intégrante du dit corps (1) de façon à former ladite poignée de préhension (3) de la laisse.

5. La laisse pour chien selon l'une quelconque des revendications précédentes, dans laquelle le réceptacle (6) comporte des parois latérales longitudinales (6b) formant saillie à angle droit à partir du dit fond (6c), lesdites parois latérales longitudinales (6b) étant munies de nervures (8) agencées pour coopérer par glissement avec des fentes (7) réalisées dans des parois latérales longitudinales correspondantes (4c) de ladite assise (4).

6. La laisse pour chien selon l'une quelconque des revendications précédentes, dans laquelle une face extérieure du dit fond (6c) du dit réceptacle (6) est munie de moyens d'agrippement (9) pour aider l'éjection du réceptacle (6) hors de ladite assise (4).

7. La laisse pour chien selon l'une quelconque des revendications précédentes, comportant des moyens supplémentaires pour collecter les excréments et s'en débarrasser, comme des petits sacs jetables, disposés dans un logement fermé formé par ladite assise (4) et ledit réceptacle (6) en position d'insertion.

8. La laisse pour chien selon la revendication 7, dans laquelle lesdits petits sacs sont disposés dans une boîte (5) apte à être fixée de façon détachable sur un fond (4c) de ladite assise (4).

9. La laisse pour chien selon la revendication 8, dans laquelle une fente (5) avec un bord en forme de scie (5a) est réalisée dans ladite boîte (5) afin de permettre la sortie des petits sacs, et d'obtenir leur arrachage à partir d'une bande comportant des lignes partiellement prédécoupées disposée dans la boîte (5).

10. La laisse pour chien selon l'une quelconque des revendications précédentes, dans laquelle ledit corps (1) a une structure en forme de boîte, logeant une poulie pour l'enroulement et le déroulement automatiques du dit élément flexible, commandée par des moyens de rappel élastiques.

## Patentansprüche

1. Hundeleine, enthaltend ein kabelförmiges oder bandförmiges flexibles Element mit einem ersten Ende, das an einem Halsband oder Geschirr eines Hundes zu befestigen ist, und einen steifen Körper (1) zum Greifen des anderen Endes des kabelförmigen oder bandförmigen Elementes, welche Leine ferner zum Aufsammeln der Hundeexkremente eine Schaufel (6) enthält, die lösbar mit dem steifen Körper (1) verbunden ist, um die normale Verwendung der Leine nicht zu stören, wobei die Schaufel (6) bündig innerhalb einer Aufnahme (4) eingesetzt ist, die in dem Körper (1) ausgebildet ist, wobei Eingriffseinrichtungen zwischen der Aufnahme (4) und der Schaufel (6) angeordnet sind, um die letztere in der eingesetzten Position zu sichern, **dadurch gekennzeichnet, dass** der Körper (1) wenigstens eine flache Seite (11) enthält, die Aufnahme (4) in der flachen Seite (11) ausgebildet ist und auch eine Seite (1a) des Körpers (1) benachbart der flachen Seite (11) betrifft, wobei die Öffnung an der Seite (1a) ein gleitendes Einsetzen der Schaufel (6) innerhalb der Aufnahme (4) zulässt, wobei die Schaufel (6) einen flachen Boden (6c) zum vollständigen Versperren der Öffnung der Aufnahme (4) über der flachen Seite (11) enthält.

2. Hundeleine nach Anspruch 1, wobei die Aufnahme (4) einen viereckigen Umriss hat, wenn sie aus einer Richtung unter einem rechten Winkel zu der flachen Seite (11) betrachtet wird, wobei der flache Boden (6c) der Schaufel (6) denselben viereckigen Umriss der Aufnahme (4) hat, wobei eine Querwand (6a) von einer Seite des Bodens (6c) vorsteht, um die Öffnung der Aufnahme (4) an der Seite (1a) vollständig zu versperren.

3. Hundeleine nach Anspruch 1 oder 2, wobei ein Handgriff (3) von der Seite (1a) des Seitenkörpers (1) vorsteht, die von der Aufnahme (4) betroffen ist.

4. Hundeleine nach Anspruch 3, wobei die Schaufel (6) ein Griffstück (3b) enthält, das, wenn die Schaufel eingesetzt ist, mit einem Griffstück (3a) koppelt, das integral mit dem Körper (1) ist, um den Handgriff (3) der Leine zu bilden.

5. Hundeleine nach einem der vorhergehenden Ansprüche, wobei die Schaufel (6) longitudinale Seitenwände (6b) enthält, die unter einem rechten Winkel von dem Boden (6c) vorstehen, welche longitudinalen Seitenwände (6b) mit Vorsprüngen (8) versehen sind, die zum gleitenden Eingriff mit Schlitzen (7) passen, die in entsprechenden longitudinalen Seitenwänden (4b) der Aufnahme (4) ausgebildet sind.

6. Hundeleine nach einem der vorhergehenden Ansprüche, wobei eine Außenseite des Bodens (6c) der Schaufel (6) mit Griffeinrichtungen (9) versehen ist, um das Entnehmen der Schaufel (6) aus der Aufnahme (4) heraus zu unterstützen.

7. Hundeleine nach einem der vorhergehenden Ansprüche, enthaltend Zusatzeinrichtungen zum Sammeln und Entsorgen der Exkremente, wie wegwerfbare kleine Beutel, die in einem geschlossenem Gehäuse angeordnet sind, das durch die Aufnahme (4) und die Schaufel (6) in der eingesetzten Position gebildet ist.

8. Hundeleine nach Anspruch 7, wobei die kleinen Beutel in einer Box (5) angeordnet sind, die passt, um lösbar an einem Boden (4c) der Aufnahme (4) befestigt zu sein.

9. Hundeleine nach Anspruch 8, wobei ein Schlitz (5) mit einem sägenähnlichen Rand (5a) in der Box (5) ausgebildet ist, um das Herausziehen der kleinen Beutel und das Abreißen davon von einem innerhalb der Box (5) angeordneten Band mit teilweisen Schnittlinien zu gestatten.

10. Hundleine nach einem der vorhergehenden Ansprüche, wobei der Körper (1) eine boxähnlich Struktur hat, die eine durch elastische Rückführeinrichtungen angetriebene Rolle zum automatischen Aufwickeln/Abwickeln des flexiblen Elementes hat.
